# EUROPEAN PATENT APPLICATION

(11) **EP 4 575 951 A1**
(43) Date of publication of application: **25.06.2025**
(21) Application number: 23219303.7
(22) Date of filing: 21.12.2023
(51) Int. Cl.: G06Q 10/0833, H04W 72/0446, H04W 74/04, G06K 7/10, G06K 19/07, G06K 19/077, H04W 4/029, H04W 4/35, H04W 4/80

(54) **ELECTRONIC TAG AND METHOD FOR AUTOMATIC ACKNOWLEDGEMENT AND SYNCHRONISATION OF PARCELS WITH RESPECTIVE ELECTRONIC TAGS TO A PARCEL SHOP**

(71) Applicant: SwipBox Development ApS, 6400 Sønderborg (DK)
(72) Inventor: Kaczmarek, Allan, 6400 Sønderborg (DK)
(74) Representative: Patrade A/S

(57) **Abstract**

A computer-implemented method (1000) for at least one electronic tag (10) of a plurality of electronic tags (10P) receiving commands via synchronised and wireless communication, said plurality of electronic tags (10P) being connected to respective plurality of parcels (1P), wherein each electronic tag (10) of the plurality of electronic tags (10P) has a periodic communication cycle (40) and a unique electronic tag ID (12), wherein each of the periodic communication cycles (40) comprising
- a receiver interval (42) for receiving commands from a master controller (90),
- a response interval (44) for responding to the master controller (90), and
- a communication pause interval (46) between the receiver interval (42) and the response interval (44);

wherein each electronic tag has a unique response interval (44),
wherein each electronic tag (10) of the plurality of electronic tags (10P) perform a step of
- observing (1100) using an antenna during the receiver interval (42); and upon receiving a command (82) including a matching unique electronic tag ID (12) perform steps of
- executing (1200) an action based on the received command (82); and
- transmitting (1300) wirelessly a response (81) during the unique response interval (44) based of the received command (82).

## Description

### Field of the Invention

The present invention relates to a computer-implemented method for at least one electronic tag of a plurality of electronic tags receiving commands via synchronised and wireless communication and an electronic tag configured to performing said method. The present invention further relates to a parcel with the electronic tag.

The present invention relates to a method for automatic acknowledgement and synchronisation of parcels with respective electronic tags to a parcel shop comprising a master controller and a master controller configured to performing said method.

### Background of the Invention

The number of parcels being sent is ever increasing and distribution systems must scale up and/or become more efficient. The last mile is an expensive part of distributing parcels, hence the parcel lockers and pick-up and drop-off (PUDO) points i.e. parcel shops or similar can be used for reducing the last mile cost.

When a number of parcels arrive at a parcel shop or PUDO point via a courier, then the parcels must be checked in at said parcel shop. The check-in can be performed by either the courier or a staff member of the parcel shop. In most cases, the check-in is performed by the staff member. The process is a largely manual process which requires that the courier checks in the parcels at the parcel shop to ensure a transfer of the parcel and the liability from the courier to the parcel shop. This is time-consuming and reduces the number of possible stops by the courier. Thus, if this transfer could be performed automatically, then it would be preferred, as it would increase the efficiency of the distribution system and it would reduce the number of mistakes.

### Object of the Invention

It is an object of the invention to provide methods, an electronic tag and a master controller enabling wireless communication and automatic transfer of liability, while minimizing energy consumption of the electronic tag as the electronic tag is preferably operational for a plurality of deliveries before requiring maintenance.

### Description of the Invention

An object of the invention is achieved by a computer-implemented method for at least one electronic tag of a plurality of electronic tags receiving commands via synchronised and wireless communication, said plurality of electronic tags being connected to respective plurality of parcels, wherein each electronic tag of the plurality of electronic tags has a periodic communication cycle and a unique electronic tag ID, wherein each of the periodic communication cycles comprising
- a receiver interval for receiving commands from a master controller,
- a response interval for responding to the master controller, and
- a communication pause interval between the receiver interval and the response interval;

wherein each electronic tag has a unique response interval,
wherein each electronic tag of the plurality of electronic tags perform a step of
   - observing using an antenna during the receiver interval; and upon receiving a command including a matching unique electronic tag ID perform steps of
      - executing an action based on the received command; and
      - transmitting wirelessly a response during the unique response interval based of the received command.

Thereby, the method enables one to many communications while enabling the many (electronic tags) to transmit a wireless response. Generally, wireless communication is less energy efficient compared to wired communication; however, the method ensures a low energy consumption by synchronised communication as the commands to and responses from each electronic tag can be received and transmitted within a small time period. As a result, the communication pause interval constitutes the longest interval of the periodic communication cycle.

The communication pause interval is preferably as large as possible and the receiver interval and the response interval are preferably as short as possible. The ratio of the communication pause interval to the periodic communication cycle may be greater than 0.99, such as 0.999 or even greater. The total length of the receiver interval and the response interval may be equal to or less than 1 ms.

Assuming that the periodic communication cycle is 1 second, wherein the sum of the receiver interval and the response interval are equal to 1 ms, then an electronic tag will be powered for communication for 3.65 days over a period of 10 years; this is an acceptable period allowing the method to be performed on battery-powered electronic tags for at least 10 years assuming the other parts of the electronic tag are not worn down before the battery. The total time for communication is inversely proportional to the sum of the receiver interval and the response interval, hence a 50 % reduction will result in the total time being 1,825 days. In the example, it is assumed that the electronic tags will always use the response interval to communicate, however that will rarely be the case depending on the use case of the plurality of electronic tags.

In a parcel shop, the electronic tags connected to a parcel will for the most part be idle, as the parcel can only be collected once, hence the power needed to perform an action and/or to respond to a command, is very limited. Thus, a relatively small battery, such as a button cell battery, would be able to power an electronic tag for a long period, such as more than 3 years depending on additional features of the electronic tag.

The communication pause interval may be single interval or intervals before and after each of the receiver interval and the response interval. In some cases, the receiver interval and the response interval will happen one after the other, however, since each electronic tag has a unique response interval then in most cases there will be a communication pause interval between the end of the receiver interval and the start of the response interval and between the end of the response interval and the start of the receiver interval.

The periodic communication cycles may be preprogrammed and stored on each electronic tag, and optionally the periodic communication cycle of the plurality of electronic tag may be stored on an external server such that any master controller is able to receive information related to the periodic communication cycle of the one or more electronic tags such that any master controller is able to communicate with said one or more electronic tags.

The master controller may and will in most cases be permanently installed at or near the storage of parcels with respective electronic tags. In some embodiments the master controller may be or form part of a controller of a parcel locker or form part of a controller of a parcel shop with a parcel storage. The permanently installed command unit may be configured to assign individual periodic communication cycles to each of the plurality of electronic tags; thereby the master controller is in control of the synchronised communication.

The antenna of each electronic tag may be designed for WLAN communication such as Bluetooth or Bluetooth low-energy or similar solutions.

The command may include one or more instructions linked to one or more unique electronic tag IDs, wherein the electronic tags with matching electronic tag IDs will perform an action based on the instructions linked to said electronic tag IDs and the other electronic tags will do nothing. The command may thus contain one or more commands to one or more electronic tags. The command may have a structure such as [instructions; ID 1];[instructions, ID 5];[instructions, ID X]; ...[instructions, ID N].

The action may be to check the status of the electronic tag or check the status of a display or check a temperature if the electronic tag is further equipped with or connected to a temperature sensor or check a sensor quantity if the electronic tag is further equipped with or connected to a sensor measuring a sensor quantity. The listed actions are non-exhaustive.

The unique response interval means that there are no overlapping response intervals, thereby only a single electronic tag responds, which improves the quality of the communication with the plurality of electronic tags. The communication may be performed on one or more bands of the wireless protocol.

The unique response interval can be unique on by time and optionally by the band.

The communication may be encrypted using standard communication encryption.

In an aspect, the command may include instructions causing at least one electronic tag to perform an action of activating a beacon unit and/or to perform an action of changing at least part of shown content on a display unit.

If a parcel with an electronic tag is to be collected, then the master controller can send a command to the electronic tag of the parcel to be collected. If the electronic tag has a beacon unit, then said action may be to activate said beacon unit allowing for faster identification and thus faster hand-over of the parcel.

The beacon unit may comprise one or more light emitting diodes and/or the beacon unit may comprise a speaker for creating a sound.

If a parcel with an electronic tag has been delivered to the parcel shop by a courier or private person, then the electronic tag may sent a command including instructions causing said electronic tag to perform an action. The action may be of changing at least part of shown content on a display unit of the electronic tag, such that said part shows a unique shelf position or a similar unique position. Thereby, the staff only needs to read the display unit of the electronic tag in order to find the storage position of the parcel.

In an aspect, the receiver interval may be less than 1ms, or 50 to 950 µs, or 100 to 750 µs, or 150 to 500 µs, or 200 to 400 µs, or 300 µs and/or wherein the unique response interval may be less than 500 µs such as 50 to 500 µs, or 75 to 400 µs, or 100 to 300 µs, or 125 to 250 µs, or 150 to 200 µs.

The current bandwidth of wireless protocols enables that a sufficient amount of data i.e. the command and response can be sent during said receiver interval and said response interval listed above.

In an aspect, at least two electronic tags may have a common receiver interval. Thereby, the master controller can broadcast to the at least two electronic tags within the time slot thereby the power required by the master controller is less compared to each electronic tag having a unique receiver interval. The command may include a series of instructions wherein each instruction is linked to a unique electronic tag ID, wherein each electronic tag is programmed to ignore instructions not linked to the unique electronic tag ID of said other electronic tag.

The at least two electronic tags may be 8 electronic tags, or 16 electronic tags, or 32 electronic tags, or 64 electronic tags or 128 electronic tags or 256 electronic tags or more electronic tags having a common receiver interval.

The plurality of electronic tags may be divided into two or more groups of electronic tags, wherein the electronic tags of each group of electronic tags have a common receiver interval. The common receiver intervals of each group of electronic tags are unique and do not overlap.

In an aspect, the step of transmitting may be performed during a subsequent communication cycle. Depending on the details of the periodic communication cycle, then it may not be possible to send a response which confirms that the action has been performed with the first coming response interval hence the response is transmitted during a subsequent communication cycle.

In an aspect, the periodic communication cycle may be equal to or less than 20 s, equal to or less than 10 s or between 0.5 s to 5 s, or between 0.75 s to 2.5 s or between 1 s to 2 s or between 1.25 to 1.75 s

The plurality of electronic tags will consume less energy as the periodic communication cycle increases in time as long as the receiver interval and the response interval remain unchanged.

However, the plurality of electronic tags will feel more unresponsive as the periodic communication cycle increases, thus there is a trade-off between total energy and responsiveness. In some embodiments, the periodic communication cycle changes as a function of the time of day and/or day of the week. In most cases, there will be a low collection rate during the night and certain hours during the day; during these periods the periodic communication cycle can be increased, such that energy consumption is lowered.

Evidently, the periodic communication cycle can be decreased during rush hours and/or during the period of courier delivery, thereby enabling faster check-in, i.e. faster transfer of liability.

An object of the invention is achieved by an electronic tag for attachment to a parcel. The electronic tag comprising
- a tag clock unit for tracking time;
- a local energy storage;
- a tag communication unit with an antenna for wireless communication;
- a tag controller including a processor and a computer-readable medium configured for storing thereon
   - a periodic communication cycle comprising a receiver interval for receiving commands, and a response interval for responding, a communication pause interval between the receiver interval and response interval, and
   - instructions causing the tag controller to change state of the electronic tag based of the periodic communication cycle between the
      - a receiver state during the receiver interval, wherein the tag communication unit is activated for wirelessly receiving a command;
      - a response state during the response interval, wherein the tag communication unit is activated for wirelessly transmitting a response;
      - a communication pause state, wherein the tag communication unit is inactive;
wherein the processor is configured to cause the electronic tag to execute an action based on the received command.

The resulting electronic tag is capable of performing synchronized and wireless communication with a master controller. The electronic tag enables one to many communications and the electronic tag enables faster and automatic check-in, i.e. acknowledgement of the parcel connected to the electronic tag such that the liability is changed automatically.

The electronic tag is powered by a local energy storage which may be a battery or battery unit. The battery can be a button cell battery or other types of batteries such as primary batteries or a rechargeable battery. The rechargeable battery may be configured for wireless charging. The total power needed for the wireless communication and control is rather small thus even a button battery will be able to power these components for several years and other battery types, such as a Li-SoCl2 battery, can power the electronic tag for more than 10 years.

The electronic tag may have stored on the computer-readable medium a unique electronic tag ID.

In an aspect, the electronic tag may include a beacon unit, wherein the processor is configured to cause the electronic tag to activate the beacon unit based on the received command.

If a parcel with an electronic tag is to be collected, then the master controller can send a command to the electronic tag of the parcel to be collected. If the electronic tag has a beacon unit, then said action may be to activate said beacon unit allowing for faster identification and thus faster hand-over of the parcel.

The beacon unit may comprise one or more light emitting diodes and/or the beacon unit may comprise a speaker for creating a sound.

In an aspect, the electronic tag may include a display, wherein the processor is configured to cause the electronic tag to change information on the display unit based on the received command.

The display or display unit may display a delivery address such that a label attached to the parcel is unnecessary.

The display or display unit is preferably a bi-stable display due to the low power consumption and the small need for updates for such an electronic tag.

If a parcel with an electronic tag has been delivered to the parcel shop by a courier or private person, then the electronic tag may be sent a command including instructions causing said electronic tag to perform an action. The action may be of changing at least part of shown content on a display unit of the electronic tag such that said part shows a unique shelf position or a similar unique position. Thereby, the staff only needs to read the display unit of the electronic tag in order to find the storage position of the parcel.

In an aspect, the electronic tag comprising means for carrying out the method according to any of the previously mentioned embodiments.

An object of the invention is achieved by a parcel comprising an electronic tag according to any of the previously mentioned embodiments. Thereby, the parcel can be handled more efficiently while enabling the electronic tag to be powered without maintenance for longer periods. This is especially important for reusable parcels wherein the electronic tag is connected to the parcel for some if not all of the reusable parcel time in circulation.

An object of the invention is achieved by a method for automatic acknowledgement and synchronisation of parcels with respective electronic tags to a parcel shop comprising a master controller. The method comprising steps of
- placing at the parcel shop, a number of parcels with respective electronic tags, wherein the master controller wirelessly communicates with the electronic tags and performs steps of
   - receiving electronic tag IDs of the number of parcels;
   - assigning a periodic communication cycle to each electronic tag,
      wherein each of the periodic communication cycles comprising
         - a receiver interval for receiving commands from a master controller,
         - a response interval for responding to the master controller, and
         - a communication pause interval between the receiver interval and response interval, and
      each electronic tag has a unique response interval,
the master controller further performs a step of sending an acknowledgment of receipt to a distribution server, said acknowledgment of receipt including electronic tag IDs of the number of parcels.

The distribution server can after receiving the acknowledgment of receipt then inform the recipient to come and collect the parcel at said parcel shop. Thus, the method enables a faster and automatic acknowledgement of received parcels at a parcel shop.

Furthermore, the assigning of periodic communication cycle enables the parcels i.e. the electronic tags to communicate wirelessly with limited power consumption.

A master controller can by performing the method communicate with any number of the plurality of electronic tags and hence the command unit can control all the electronic tags by utilising the information of the periodic communication cycles.

The master controller may have means such as a pin pad and/or display capable of receiving inputs and/or barcode reader and/or an NFC module and/or a Bluetooth unit.

In an aspect, two or more electronic tags may have a common receiver interval.

An object of the invention is achieved by a parcel shop for distribution of parcels, wherein the parcel shop comprises
- a storage area for storage of a number of parcels, and
- a master controller comprising a controller communication unit including an antenna, a processor, and a computer readable medium, wherein the master controller being configured for executing the step of the method for automatic acknowledgement and synchronisation of parcels with respective electronic tags to a parcel shop.

The parcel shop is able to receive parcels from couriers faster and the electronic tags of the parcels are assigned such that the total power consumption for wireless communication is reduced significantly.

An object of the invention is achieved by a computer program product comprising instructions which, when the program is executed by an electronic tag according to any of claims 7 to 8, cause the computer to carry out the method of any of claims 1 to 6.

An object of the invention is achieved by a computer readable medium such as a non-transitory computer readable medium, wherein the computer-readable medium having stored thereon the computer program product of claim 15.

### Description of the Drawing

Embodiments of the invention will be described in the figures, whereon:
Fig. 1 illustrates a parcel with an electronic tag;
Fig. 2 illustrates a periodic communication cycle;
Fig. 3 illustrates a periodic communication cycle with two groups of electronic tags;
Fig. 4 illustrates an electronic tag;
Fig. 5 illustrates a parcel shop;
Fig. 6 illustrates a method for at least one electronic tag of a plurality of electronic tags receiving commands via synchronised and wireless communication;
Fig. 7 illustrates a method for automatic acknowledgement and synchronisation of parcels with respective electronic tags to a parcel shop;
Fig. 8 illustrates a courier drop-off of parcels to a parcel shop.

**Detailed Description of the Invention**

| **Item** | **No** |
|---|---|
| Parcel | 1 |
| Parcel shop | 2 |
| Plurality of parcels | 1P |
| Electronic tag | 10 |
| Plurality of electronic tags | 10P |
| Electronic tag ID | 12 |
| Tag clock unit | 16 |
| Local energy storage | 18 |
| groups of electronic tags | 19 |
| Tag communication unit | 22 |
| Tag controller | 24 |
| Processor | 26 |
| Computer-readable medium | 28 |
| Beacon unit | 30 |
| Display unit | 32 |
| Periodic communication cycle | 40 |
| Receiver interval | 42 |
| Response interval | 44 |
| Communication pause interval | 46 |
| Master controller | 60 |
| Controller communication unit | 62 |
| Processor | 64 |
| Computer readable medium | 66 |
| Command | 82 |
| Response | 84 |
| Server | 100 |
| Computer-implemented method for at least one electronic tag of a plurality of electronic tags receiving commands via synchronised and wireless communication | 1000 |
| Observing | 1100 |
| Executing | 1200 |
| Transmitting | 1300 |
| Method for automatic acknowledgement and synchronisation of parcels with respective electronic tags to a parcel shop | 2000 |
| Placing | 2100 |
| Receiving | 2200 |
| Assigning | 2300 |
| Sending | 2400 |

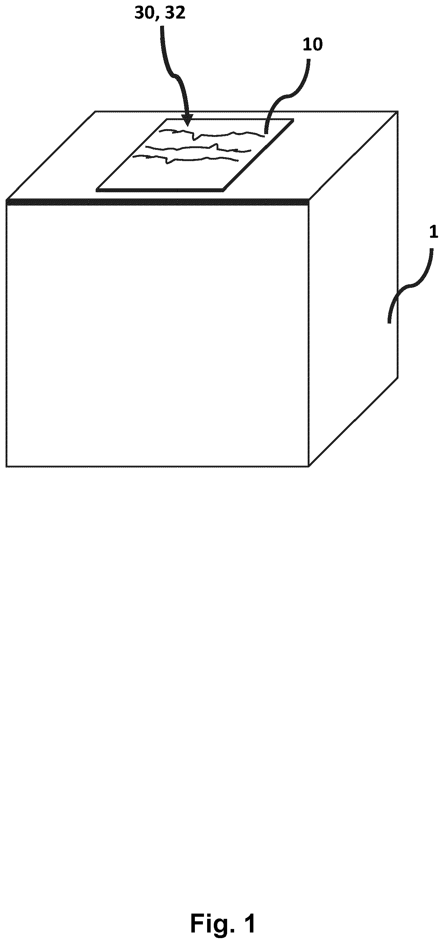

Fig. 1 illustrates a parcel 1 with an electronic tag 10.

The electronic tag 10 may comprise a beacon unit 30 for activating a beacon as a function of received command such as sound or light.

The electronic tag 10 may comprise a display unit 30 for providing visual information such as delivery address or position on a shelf in a parcel shop 2 or other kinds of information. In other embodiments, the electronic data provides this visual data via wireless communication in accordance with the invention.

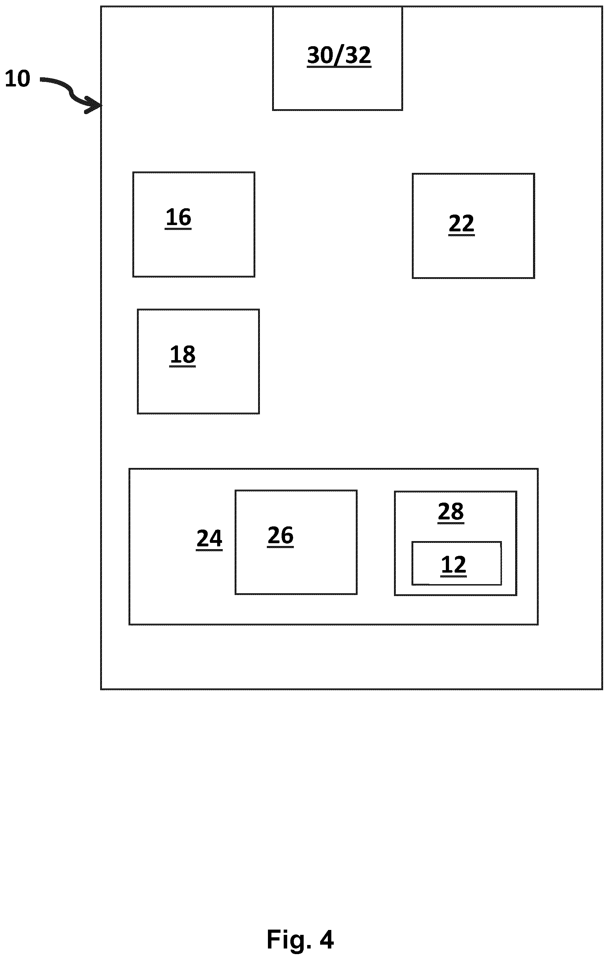

The electronic tag 10 may have the features disclosed in figure 4.

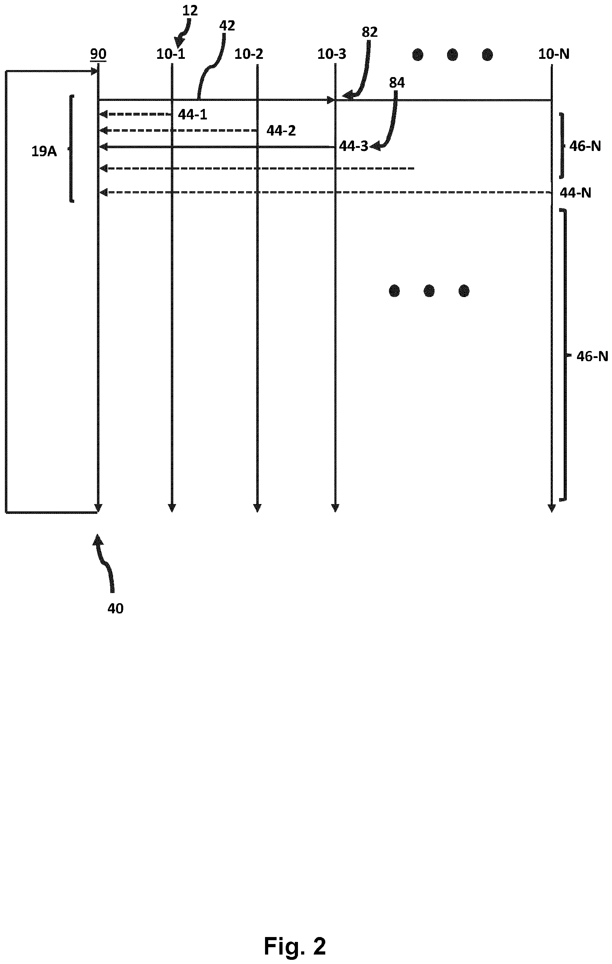

Fig. 2 illustrates a periodic communication cycle 40. The shown figure has time along the vertical axis and the periodicity is represented by the arrow moving back to the top. The horizontal arrows represent communication between a master controller 90 and N electronic tags 10. The dotted horizontal arrows represent not used communication time slots. The unique electronic tag ID 12 is in the figure shown as the number after reference number 10-"number". The N lock units 10 are part of a group of electronic tags 30A.

In the shown embodiment, the master controller 90 communicates a command 82, which command 82 includes an instruction for electronic tag 10 with unique electronic tag ID 12 being the number "3" hence the arrow to electronic tag 10-3. All the electronic tags 10 receive the command 82 but all electronic tags 10 except electronic tag 10-3 ignores the instructions. The electronic tag 10-3 performs an action based on the received instructions contained in the command 82.

All electronic tags 10 have a unique response interval 44, but since only electronic tag 10-3 receive a command, then it is only electronic tag 10-3 which transmits a response 84 to the master controller 90 hence said line is solid. The response 84 may be instructions received and the action completed may be during a subsequent cycle - this will usually be the case when the instruction is to open a compartment 1.

The communication pause interval 46 is only shown for electronic tag 10-N but all electronic tags 10 have a communication pause interval 46 and most have a communication pause interval 46 on each side of the receiver interval 42 and the response interval 44.

In the next periodic communication cycle 40 there may not be a command which would happen most often as most parcel shops will not have a parcel being collected every 1 second.

However, the next or a future periodic communication cycle 40 could include a command 82 to one or more of the electronic tags 10 and it will result in one or more responses84.

If no command 90 is sent to a specific electronic tag 10 then the master controller 90 may be in idle mode during the response interval of said electronic tag 10 as there will be no response 84.

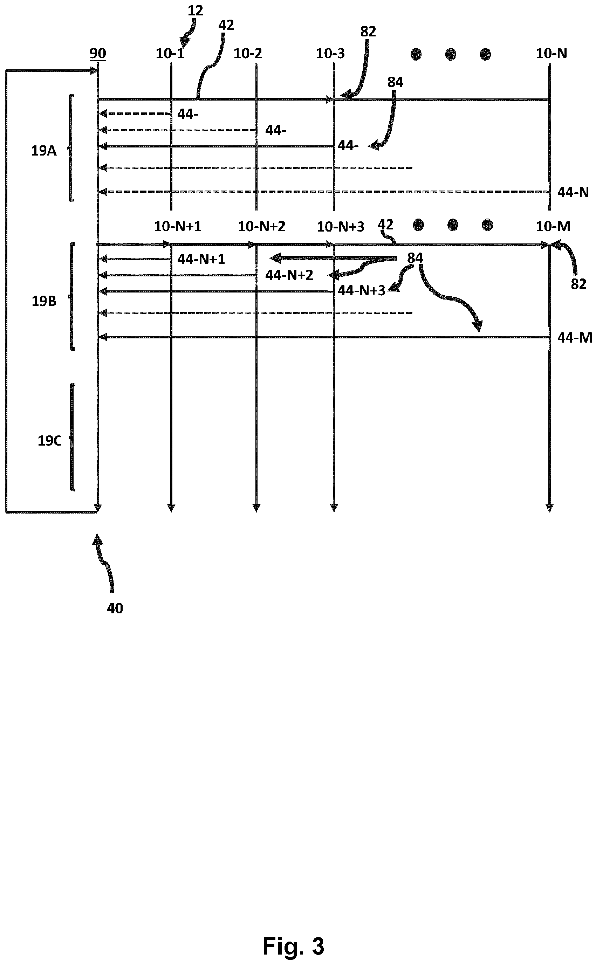

Fig. 3 illustrates a periodic communication cycle 40 with two groups of electronic tags 19A, 19B. The first group of electronic tags 19A has in the shown embodiment the same communication as shown in figure 2.

The second group of electronic tags 19B has an electronic tag 10 with unique electronic tag ID 12 being N+1 to an electronic tag 10 with unique electronic tag ID 12 being M, wherein M>N+1. During the receiver interval 82 of the second group of electronic tags 19B a command 82 is broadcasted with instructions for electronic tags 10 with the unique electronic tag IDs being N+1, N+2, N+3 and M. The electronic tags 10 which have received instructions will execute an action based on the received instructions. The electronic tags 10 with unique electronic tag IDs being N+1, N+2, N+3 and M will transmit a response to the master controller 90 during their respective response intervals 44.

The master controller 90 may communicate with a third group of electronic tags 19C or more group of electronic tags 19X, however the figure does not disclose a specific communication pattern as it can be represented by figure 2 and figure 3.

Fig. 4 illustrates an electronic tag 10. The electronic tag 10 will be attached to the outer surface of a parcel 1 or be positioned inside the parcel 1.

The electronic tag 10 comprises a tag clock unit 16 for tracking time such that the electronic tag 10 can communicate in accordance with the periodic communication cycle, which may have sub 1 ms intervals for receiving and responding.

The electronic tag 10 comprises a local energy storage 18, such as a battery or battery unit comprising two or more batteries in series or parallel configuration. The battery may be a button cell battery, a primary battery or a rechargeable battery. The rechargeable battery may be configured for wireless charging.

The electronic tag 10 comprises a tag communication unit 22 with an antenna for wireless communication. The tag communication unit 22 may be configured to communicate in accordance with the Bluetooth protocol or Bluetooth low-energy protocol or a similar wireless and energy efficient protocol.

The electronic tag 10 comprises a tag controller 24 including a processor 26 and a computer-readable medium 28 configured for storing thereon
- a periodic communication cycle 40 comprising a receiver interval 42 for receiving commands, and a response interval 44 for responding, a communication pause interval 46 between the receiver interval 42 and response interval 44, and
- instructions causing the tag controller 24 to change state of the electronic tag (10) based on the periodic communication cycle (40) between
   - a receiver state during the receiver interval 42, wherein the tag communication unit 22 is activated for wirelessly receiving a command 82;
   - a response state during the response interval 44, wherein the tag communication unit 22 is activated for wirelessly transmitting a response 84;
   - a communication pause state, wherein the tag communication unit 22 is inactive;
wherein the processor 26 is configured to cause the electronic tag 10 to execute an action based on the received command 82.

The electronic tag 10 may include a beacon unit 30, wherein the processor 26 is configured to cause the electronic tag 10 to activate the beacon unit 30 based on the received command 82. The beacon unit 30 may activate a light source such as a light emitting diode or a sound or vibration generator such as a speaker. The solution with a light source will generally require that the electronic tag 10 is connected to an external side of the parcel 1 while the generation of sound or vibration can be heard or felt almost independently of the position of the electronic tag 10.

The electronic tag 10 may include a display unit 32, wherein the processor 26 is configured to cause the electronic tag 10 to change information on the display unit 32 based on the received command 82. Thereby, the delivery address can be updated, or a shelf position can be shown on the display unit 32. The display unit 32 may be e-ink display or a bi-stable display.

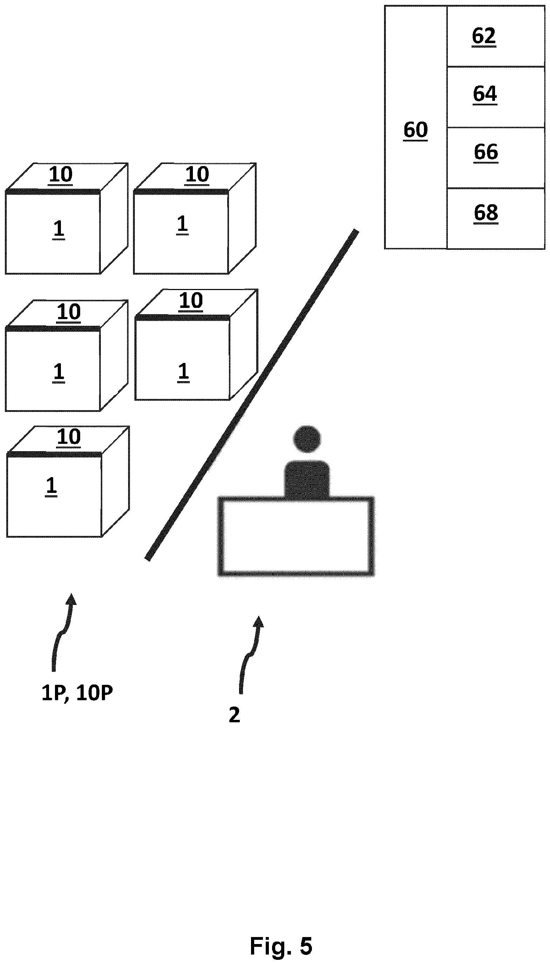

Fig. 5 illustrates a parcel shop 2. The parcel shop comprises a storage area for storage of a number of parcels 1 with electronic tags 10.There may be a plurality of parcels 1P with respective electronic tags 10P.

The master controller 60 comprising a controller communication unit 62 including an antenna, a processor 64, and a computer readable medium 66 and a controller clock unit 68, wherein the master controller 60 being configured for executing the steps of the method for automatic acknowledgement and synchronisation of parcels 1 with respective electronic tags 10 to a parcel shop 2.

The controller clock unit 68 may form part of the processor 64. This enables that the master controller 60 can communicate within the sub 1 ms intervals described in figure 2 and 3.

The controller communication unit 62 may be configured to communicate in accordance with the Bluetooth protocol or Bluetooth low-energy protocol or a similar wireless and energy efficient protocol.

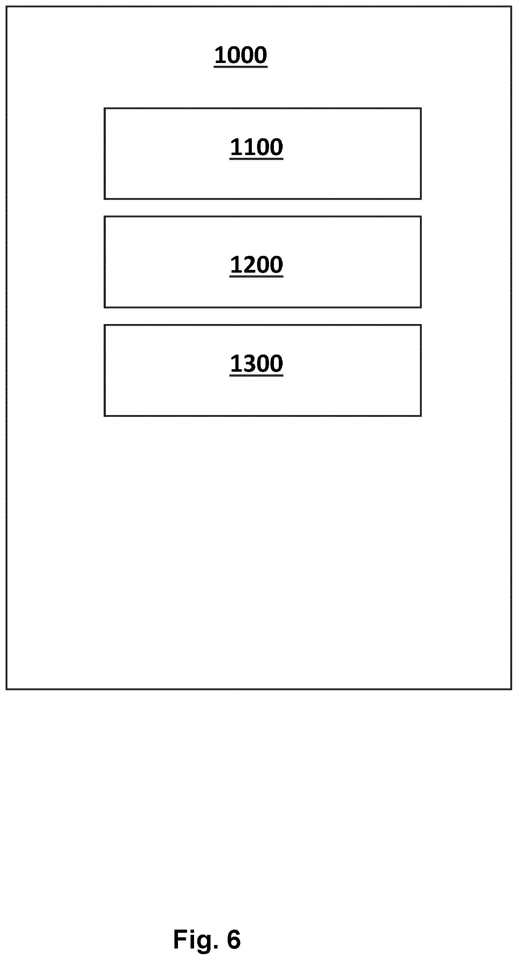

Fig. 6 illustrates a method 1000 for at least one electronic tag 10 of a plurality of electronic tags 10P receiving commands via synchronised and wireless communication. each electronic tag 10 of the plurality of electronic tags 10P perform a step of
- observing 1100 using an antenna during the receiver interval 42; and upon receiving a command 82 including a matching unique electronic tag ID 12 perform steps of
   - executing 1200 an action based on the received command 82; and
   - transmitting 1300 wirelessly a response 81 during the unique response interval 44 based of the received command 82.

The method is energy efficient for wireless communication which is important as the electronic tags are powered via a local energy storage such as a battery.

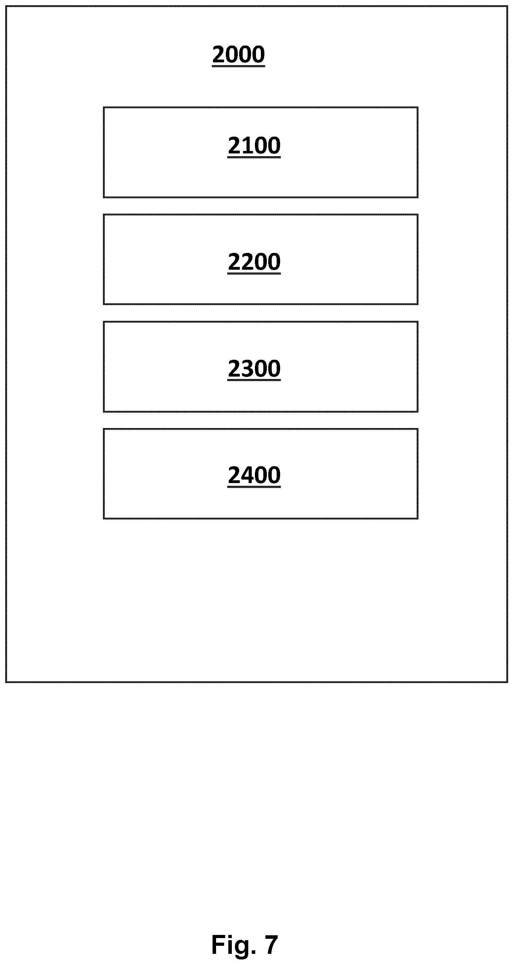

Fig. 7 illustrates a method 2000 for automatic acknowledgement and synchronisation of parcels 1 with respective electronic tags 10 to a parcel shop 2 such as the parcel shop 2 disclosed in figure 5.

The master controller 60 wirelessly communicates with the electronic tags 10 and performs steps of
- receiving 2200 electronic tag IDs of the number of parcels 1;
- assigning 2300 a periodic communication cycle 40 to each electronic tag 10,
   wherein each of the periodic communication cycles 40 comprising
      - a receiver interval 42 for receiving commands from a master controller 60,
      - a response interval 44 for responding to the master controller 60, and
      - a communication pause interval 46 between the receiver interval 42 and response interval 44, and
   each electronic tag has a unique response interval 44.

The master controller 60 further performs a step of sending 2400 an acknowledgment of receipt to a distribution server 100, said acknowledgment of receipt including electronic tag IDs 12 of the number of parcels 1.

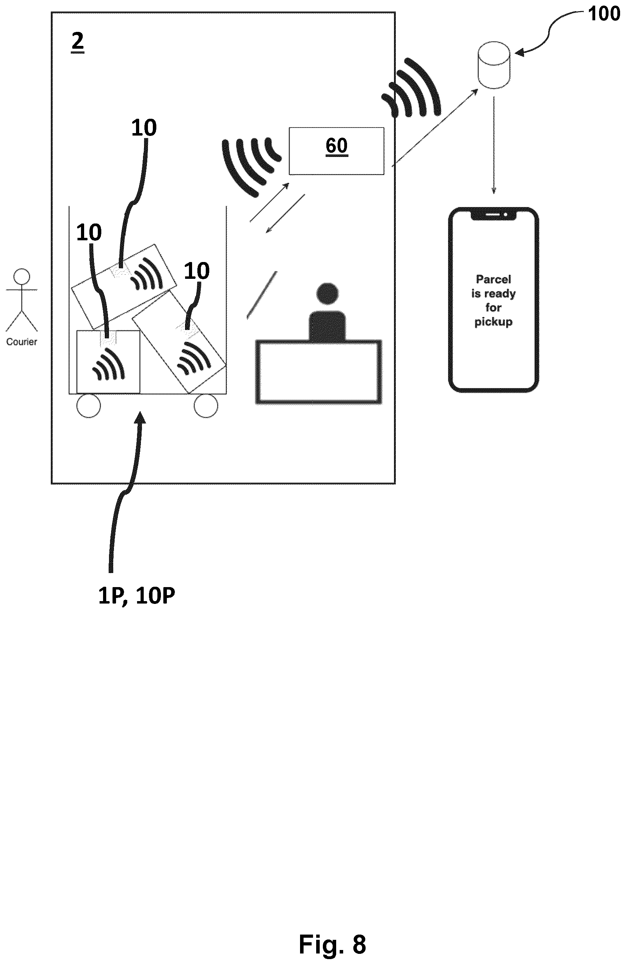

Fig. 8 illustrates a courier drop-off of parcels 1 to a parcel shop 2. The master controller 60 performs the method 2000 described for automatic acknowledgement and synchronisation of parcels 1 with respective electronic tags 10 to a parcel shop 2. Thereby, the courier can deliver the plurality of parcels 1P with a plurality of electronic tags 10P to the parcel shop 2. In the shown figure a trolley is used but the parcels 1P can be delivered in any other way.

The master controller 60 communicates with the electronic tags 10 as indicated by the expanding waves and sends an acknowledgement to a distribution server 100.

The distribution server 100 may then inform the recipient via e-mail, letter or by a push message on a smart phone (as shown) or by any other means.

## Claims

1. A computer-implemented method (1000) for at least one electronic tag (10) of a plurality of electronic tags (10P) receiving commands via synchronised and wireless communication, said plurality of electronic tags (10P) being connected to respective plurality of parcels (1P), wherein each electronic tag (10) of the plurality of electronic tags (10P) has a periodic communication cycle (40) and a unique electronic tag ID (12), wherein each of the periodic communication cycles (40) comprising
- a receiver interval (42) for receiving commands from a master controller (90),
- a response interval (44) for responding to the master controller (90), and
- a communication pause interval (46) between the receiver interval (42) and the response interval (44);
wherein each electronic tag has a unique response interval (44),
wherein each electronic tag (10) of the plurality of electronic tags (10P) perform a step of
- observing (1100) using an antenna during the receiver interval (42); and upon receiving a command (82) including a matching unique electronic tag ID (12) perform steps of
- executing (1200) an action based on the received command (82); and
- transmitting (1300) wirelessly a response (81) during the unique response interval (44) based of the received command (82).

2. The method (1000) according to claim 1, wherein the command includes instructions causing at least one electronic tag (10) to perform an action of activating a beacon unit (30) and/or to perform an action of changing at least part of shown content on a display unit (32).

3. The method (1000) according to claim 1 or 2, wherein the receiver interval (42) is less than 1ms, or 50 to 950 µs, or 100 to 750 µs, or 150 to 500 µs, or 200 to 400 µs, or 300 µs and/or wherein the unique response interval (44) is less than 500 µs such as 50 to 500 µs, or 75 to 400 µs, or 100 to 300 µs, or 125 to 250 µs, or 150 to 200 µs.

4. The method (1000) according to any of claims 1 to 3, wherein at least two electronic tags (10) have a common receiver interval (42).

5. The method (1000) according to any of claims 1 to 4, wherein the step of transmitting (1300) is performed during a subsequent communication cycle.

6. The method (1000) according to any of claims 1 to 5, wherein the periodic communication cycle (40) is equal to or less than 20 s, equal to or less than 10 s or between 0.5 s to 5 s, or between 0.75 s to 2.5 s or between 1 s to 2 s or between 1.25 to 1.75 s

7. A electronic tag (10) for attachment to a parcel, the electronic tag (10) comprising
- a tag clock unit (16) for tracking time;
- a local energy storage (18);
- a tag communication unit (22) with an antenna for wireless communication;
- a tag controller (24) including a processor (26) and a computer-readable medium (28) configured for storing thereon
- a periodic communication cycle (40) comprising a receiver interval (42) for receiving commands, and a response interval (44) for responding, a communication pause interval (46) between the receiver interval (42) and response interval (44), and
- instructions causing the tag controller (24) to change state of the electronic tag (10) based of the periodic communication cycle (40) between
- a receiver state during the receiver interval (42), wherein the tag communication unit (22) is activated for wirelessly receiving a command (82);
- a response state during the response interval (44), wherein the tag communication unit (22) is activated for wirelessly transmitting a response (84);
- a communication pause state, wherein the tag communication unit (22) is inactive;
wherein the processor (26) is configured to cause the electronic tag (10) to execute an action based on the received command (82).

8. An electronic tag (10) according to claim 7, wherein the electronic tag (10) includes a beacon unit (30), wherein the processor (26) is configured to cause the electronic tag (10) to activate the beacon unit (30) based on the received command (82).

9. An electronic tag (10) according to any of claims 7 to 8, wherein the electronic tag (10) includes a display unit (32), wherein the processor (26) is configured to cause the electronic tag (10) to change information on the display unit (32) based on the received command (82).

10. A electronic tag (10) according to any of claims 7 to 9, wherein the electronic tag (10) comprising means for carrying out the method (1000) according to any of claims 1-6.

11. A parcel (1) comprising an electronic tag (10) according to any of claims 7 to 10.

12. A method (2000) for automatic acknowledgement and synchronisation of parcels (1) with respective electronic tags (10) to a parcel shop (2) comprising a master controller (60), the method (2000) comprising steps of
- placing (2100) at the parcel shop (2), a number of parcels (1) with respective electronic tags (10),
wherein the master controller (60) wirelessly communicates with the electronic tags (10) and performs steps of
- receiving (2200) electronic tag IDs of the number of parcels (1);
- assigning (2300) a periodic communication cycle (40) to each electronic tag (10),
wherein each of the periodic communication cycles (40) comprising
- a receiver interval (42) for receiving commands from a master controller (90),
- a response interval (44) for responding to the master controller (90), and
- a communication pause interval (46) between the receiver interval (42) and response interval (44), and
each electronic tag has a unique response interval (44),
the master controller (60) further performs a step of sending () an acknowledgment of receipt to a distribution server, said acknowledgment of receipt including electronic tag IDs (12) of the number of parcels (1).

13. A method (2000) according to claim 12, wherein two or more electronic tags (10) have a common receiver interval (42).

14. A parcel shop (2) for distribution of parcels, wherein the parcel shop (2) comprises
- a storage area for storage of a number of parcels, and
- a master controller (60) comprising a controller communication unit (62) including an antenna, a processor (64), and a computer readable medium (66), wherein the master controller (60) being configured for executing the steps of the method according to claim 12 or 13.

15. A computer program product comprising instructions which, when the program is executed by an electronic tag (10) according to any of claims 7 to 8, cause the computer to carry out the method of any of claims 1 to 6.

16. A computer readable medium such as a non-transitory computer readable medium, wherein the computer-readable medium having stored thereon the computer program product of claim 15.
